Europäisches Patentamt

European Patent Office

Office européen des brevets

(19)

(11) Veröffentlichungsnummer: **0 237 884 B1**

# EUROPÄISCHE PATENTSCHRIFT

(12)

(45) Veröffentlichungstag der Patentschrift: **16.09.92**

(51) Int. Cl.⁵: **H04N 9/83**

(21) Anmeldenummer: **87103207.4**

(22) Anmeldetag: **06.03.87**

(54) **Videorecorder mit verbesserter Tonaufzeichnung.**

(30) Priorität: **15.03.86 DE 3608796**

(43) Veröffentlichungstag der Anmeldung:
**23.09.87 Patentblatt 87/39**

(45) Bekanntmachung des Hinweises auf die
Patenterteilung:
**16.09.92 Patentblatt 92/38**

(84) Benannte Vertragsstaaten:
**AT BE CH DE ES FR GB GR IT LI LU NL SE**

(56) Entgegenhaltungen:
**EP-A- 0 062 783**
**EP-A- 0 143 654**
**DE-A- 3 237 901**
**DE-A- 3 306 978**
**DE-A- 3 314 782**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Kluth, Hans-Jürgen, Dipl.-Ing.
Weichselstrasse 11
W-7730 VS-Villingen(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

**Beschreibung**

Bei Videorecordern, z.B. nach dem Prinzip der Schrägspuraufzeichnung nach den Systemen VHS, Betamax, Video 2000, ist es bekannt, mit den Videoköpfen innerhalb des für die Aufzeichnung verfügbaren Frequenzbereiches einen mit dem Videosignal frequenzmodulierten Bildträger, unterhalb dessen Frequenzspektrum einen in der Frequenz herabgesetzten Farbträger und außerdem einen oder mehrere mit Tonsignalen frequenzmodulierte Tonträger aufzuzeichnen. Diese Lösung hat gegenüber der Aufzeichnung des NF-Tonsignals auf einer zur Bandkante parallel verlaufenden Längsspur den Vorteil, daß für den Ton eine höhere Aufzeichnungsbandbreite und somit eine HiFi-Wiedergabequalität erreicht werden. Die Tonträger liegen dabei z.B. zwischen den Frequenzspektren des herabgesetzten Farbträgers und des Bildträgers oder auch innerhalb des Frequenzspektrums des Bildträgers. Ein derartiger Recorder ist bekannt durch die DE-A-3 314 782.

Bei einer derartigen Tonaufzeichnung werden z.B. zur Vermeidung von Störungen zwischen Farbträger, Bildträger und Tonträger die Frequenzspektren des Farbträgers und/oder Bildträgers durch Filter eingeengt oder im Frequenzspektrum des Bildträgers der vom Tonträger eingenommene Frequenzbereich unterdrückt. Dadurch kann es zur Beeinträchtigung der Bildqualität oder zu Störungen durch Intermodulationen kommen. Derartige Störungen können z.B. auftreten, wenn ein derart mit einem Tonträger bespieltes Band mit einem Videorecorder wiedergegeben wird, der nicht die erforderlichen Schaltungsmittel, z.B. Filter zur Unterdrückung der Tonträger im Weg des Bildträgers aufweist.

Es ist auch bekannt (EP-A-O 143 654), ein digitales Tonsignal oberhalb des von dem Bildträger eingenommen Frequenzbereiches etwa im Bereich von 3 bis 8 MHz aufzuzeichnen. Dabei handelt es sich aber um ein digitales Tonsignal, dessen Zeitfehler durch die Speicherung bei der Wiedergabe ohnehin beseitigt werden. Die Aufgabe, in einem vom Band abgetasteten frequenzmodulierten Tonträger Zeitfehler zu beseitigen und außerdem die Rückumsetzung auf die genormten Tonträgerfrequenzen zu bewirken, wird dort nicht behandelt und auch nicht gelöst.

Diese Aufgabe wird durch die im Anspruch 1 beschriebene Erfindung gelöst. Vorteilhafte Weiterbildungen der Erfindung sind in den abhängigen Ansprüchen beschrieben.

Die erfindungsgemäße Lösung beruht auf folgender Überlegung. Der Bildträger nimmt innerhalb der Aufzeichnungsbandbreite des Videorecorders z.B. einen Frequenzbereich von 1,0 bis 5,5 MHz ein, wobei die Frequenzgang-Kennlinie des Recordes bei 6,0 MHz praktisch auf Null abgefallen ist. Es ist indessen möglich, den Frequenzbereich nach oben hin um einen Teilbereich zu erweitern, z.B. von 6,0 auf 7,5 MHz. Dies kann z.B. erfolgen durch absichtlich geschaffene Resonanzstellen an den Köpfen oder den Kopfverstärkern, die eine Resonanzanhebung der Frequenzgang-Kennlinie in dem Teilbereich etwa bei 6,0 bis 7,5 MHz bewirken. Auch durch sonstige Maßnahmen wie Verringerung der Kopfspaltlänge und dgl. läßt sich der verfügbare Frequenzbereich nach oben bis 7,5 MHz erweitern. In dem dadurch geschaffenen erweiterten Frequenzbereich, der bei der Wiedergabe bei der Demodulation des Bildträgers unterdrückt wird, werden erfindungsgemäß der oder die Tonträger aufgezeichnet.

Durch diese Lösung ergeben sich mehrere Vorteile. Der Tonträger ist durch seine Lage am oberen Ende des Frequenzbereiches so weit von dem Farbträger und dem Bildträger entfernt, daß eine störende Beeinflussung nicht mehr erfolgen kann. Er liegt außerdem in einem Bereich, der für einen Bildträger ausreichend großer Bandbreite nicht mehr benötigt wird. Durch die Umsetzung der Frequenz des Tonträgers auf seine Originalfrequenz bei der Widergabe mit einem aus der Zeilenfrequenz des abgetasteten Signals abgeleiteten Mischträger werden außerdem Zeitfehler im Tonträger weitestgehend beseitigt. Das beruht darauf, daß der aus der Zeilenfrequenz abgeleitete Mischträger zwangsläufig die gleichen Zeitfehler aufweist wie der Tonträger, so daß bei geeigneter Frequenzlage bei der Mischung zwischen Mischträger und Tonträger diese Zeitfehler wegfallen. Die aufgezeichnete Zeilenfrequenz wird also zur Erzeugung eines die Zeitfehler anzeigenden und kompensierenden Pilotträgers verwendet.

Außerdem wird eine Kompatibilität mit bisherigen Recordern nach der VHS-Norm geschaffen. Ein bisheriger Recorder, bei dem z.B. der Frequenzbereich bei 6,0 MHz endet, dann den erfindungsgemäß aufgezeichneten Tonträger nicht mehr abtasten und wird daher durch diesen auch nicht gestört. Die erfindungsgemäße Aufzeichnung erfordert also keine Systemänderung der bisherigen Aufzeichnungsnorm, z.B. der VHS-Norm Andererseits können Recorder, die für die VHS-Norm ausgebildet sind, durch Nachrüstung für die erfindungsgemäße Aufzeichnung der Tonträger ausgebildet werden, indem in der beschriebenene Weise der Frequenzbereich nach oben hin erweitert und die Tonträger in diesem Frequenzbereich aufgezeichnet werden. Um beste Voraussetzungen für diese Tonaufzeichnung zu schaffen, sollte vor Einlagerung der Tonträger mit einer Filteranordnung (z.B. Bandsperre oder Notchfilter) dieser Frequenzbereich freigemacht werden.

Die Erfindung wird anhand der Zeichnung erläutert. Darin zeigen

Fig. 1    ein Frequenzdiagramm für die Lage von Farbträger, Bildträger und Tonträger und

Fig. 2    ein Blockschaltbild für ein Ausführungsbeispiel der Erfindung.

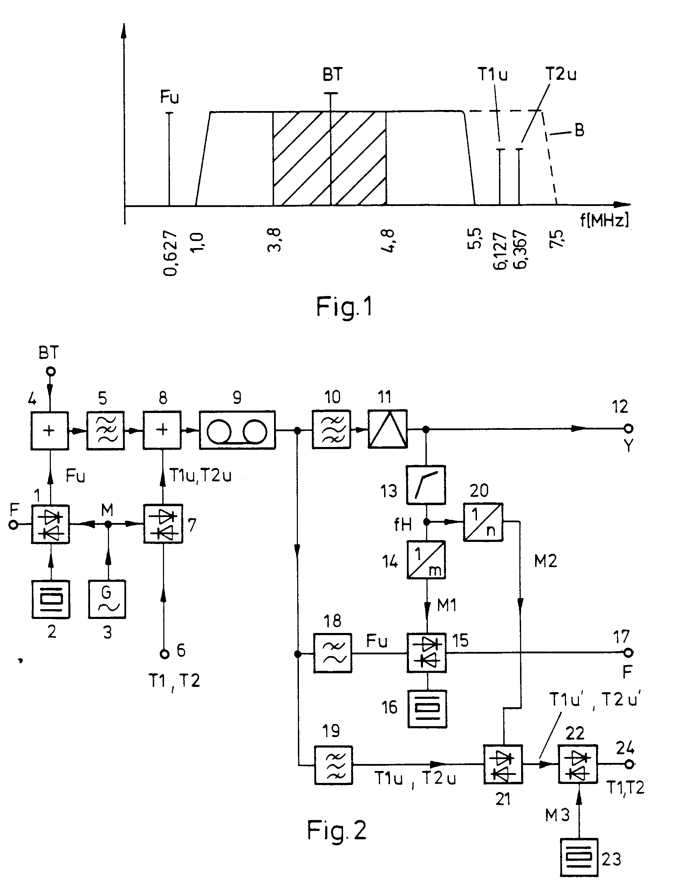

Gemäß Fig. 1 ist bei einer Frequenz von 0,627 MHz der in der Frequenz herabgesetzte Farbträger FU, im Frequenzbereich von 1,0 - 5,5 MHz der Bildträger BT mit einem Frequenzhub von 3,8 MHz (Synchronboden) bis 4,8 MHz (Weiß) aufgezeichnet. Der für die Aufzeichnung zur Verfügung stehende Frequenzbereich endet dabei etwa bei 6,0 MHz. Durch Resonanzüberhöhungen in der Kopfschaltung oder im Kopfverstärker etwa im Bereich von 6 - 7 MHz ist der Frequenzbereich um den gestrichelt gezeichneten Teilbereich B bis auf etwa 7,0 - 7,5 MHz erweitert. Die Frequenzgang-Kennlinie des gesamten Recorders reicht also etwa von 0,5 - 7,5 MHz. In dem neu geschaffenen Teilbereich B sind die beiden in der Frequenz umgesetzten Tonträger T1u und T2u mit den Frequenzen von 6,127 und 6,367 MHz aufgezeichnet. Diese Tonträger ergeben sich durch Mischung der genormten Tonträger mit den Frequenzen von 5,5 MHz und 5,74 MHz jeweils mit einem nichtmodulierten Mischträger mit der Frequenz von 0,627 MHz.

In Fig. 2 wird der Farbträger F mit der Originalfrequenz von 4,43 MHz in der Mischstufe 1 durch aufeinandfolgende Mischung mit einem Mischträger vom Quarzoszillator 2 und einem Mischträger M mit einer Frequenz von 0,627 MHz von dem Oszillator 3 auf den in der Frequenz herabgesetzten Farbträger Fu mit der Frequenz von 0,627 MHz umgesetzt. Der Farbträger Fu wird in der Addierstufe 4 mit dem Bildträger BT vereinigt und der Bandsperre 5 zugeführt, die eine Unterdrückung der Frequenzen von etwa 6 - 6,5 MHz bewirkt. Die Bandsperre 5 dient dazu, diesen für die Aufzeichnung der Tonträger vorgesehenen Frequenzbereich von Restkomponenten des Bildträgers BT zu befreien. Die Tonträger T1, T2 von der Klemme 6 mit den Frequenzen von 5,5 und 5,74 MHz werden mit dem Mischträger in der Mischstufe 7 auf die Tonträger T1u und T2u gemäß Fig. 1 umgesetzt und in der Addierstufe 8 dem Gemisch aus dem Farbträger Fu und dem Bildträger BT hinzugefügt. Das so gewonnene Signalgemisch gemäß Fig. 1 wird mit dem Videorecorder 9 aufgezeichnet. Es kann auch anstelle dieser Lösung durch Doppelausnutzung eines vorhandenen Mischträgers mit 0,627 MHz ein beliebiges Vielfaches der Zeile (z.B. 40 fH) für die Tonträgerumsetzung gewählt werden.

Bei der Wiedergabe wird mit dem Bandfilter 10, das einen Durchlaßbereich von etwa 1,0 - 5,5 MHz hat, der Bildträger BT frequenzselektiv ausgewertet und dem FM-Demodulator 11 zugeführt, der an der Klemme 12 das Videosignal Y liefert. Das Bandfilter 10 besteht vorzugsweise aus einem Hochpaß, der die Frequenzen etwa von 0 - 1,0 MHz unterdrückt, und einem Tiefpaß, der die Frequenzen oberhalb 5,5 MHz, und somit den Teilbereich B, unterdrückt. Mit der Synchron-Abtrennstufe 13 werden die Zeilensynchronimpulse mit der Zeilenfrequenz fH ausgewertet und dem Frequenzvervielfacher 14 zugeführt. Dieser erzeugt daraus einen Mischträger M mit der Frequenz n x fH von 40 . fH + 1/8 fH = 0,627 MHz. Der Mischträger M dient in der Mischstufe 15 zusammen mit einem Mischträger vom stabilen Quarzoszillator 16 zur Umsetzung der Frequenz des Farbträgers Fu auf die Originalfrequenz, wodurch wieder der Farbträger F an der Klemme 17 gewonnen wird. Der Farbträger Fu wird mit dem Tiefpaß 18 mit einer Grenzfrequenz von 1,0 MHz aus dem Signalgemisch frequenzselektive ausgewertet. Mit dem Frequenzvervielfacher 20 mit dem Faktor n = 360 wird aus der Zeilenfrequenz fH ein Mischträger M2 mit der Frequenz von 5,625 MHz erzeugt. Die abgetasteten Tonträger T1u, T2u werden mit dem Bandfilter 19 mit einem Durchlaßbereich von 6,0 bis 6,5 MHz ausgewertet und der Mischstufe 21 zugeführt. Durch Mischung der Tonträger T1u, T2u mit den Frequenzen von 6,127 und 6,367 MHz mit dem Mischträger M2 mit der Frequenz 5,625 MHz werden umgesetzte Tonträger T1u', T2u' mit den Frquenzen 0,502 MHz und 0,742 MHz gewonnen. Diese Tonträger werden in der Mischstufe 22 mit dem Mischträger M3 mit 4,998 MHz vom Quarzoszillator 23 gemischt. Dadurch stehen an der Klemme 24 wieder die ursprünglichen Tonträger T1,T2 mit den Frequenzen 5,5 und 5,74 MHz.

Die Träger T1u und T2u und der Mischträger M2 an den Eingängen der Mischstufe 21 haben Frequenzen in der gleichen Größenordnung von 6 MHz. Diese gleiche Größenordnung der Frequenzen ist wichtig, damit die gemischten Träger etwa gleich große Zeitfehler z.B. in ms aufweisen. Die Tonträger T1u,T2u am Eingang der Mischstufe 21 haben dann etwa die gleichen Zeitfehler wie der Mischträger M2, da der Mischträger M2 aus der Zeilenfrequenz fH des Videosignals Y gewonnen ist. Durch die Mischung in der Mischstufe 21 werden daher diese durch Schwankungen der Geschwindigkeit des die Videoköpfe tragenden Kopfrades entstehenden Zeitfehler beseitigt, so daß die Tonträger T1,T2 an der Klemme 24 von den Zeitfehlern weitestgehend befreit sind. Mit der beschriebenen Schaltung ist eine Reduzierung des Zeitfehler um etwa 50 dB möglich.

Die Tonträger T1, T2 stellen ein Stereo-Tonsignal oder ein Tonsignal in zwei verschiedenen Sprachen dar. Die erfindungsgemäße Lösung ist ebenso anwendbar für nur einen Tonträger bei Monobetrieb. In dem neu geschaffenen Teilbereich B gemäß Fig. 1 kann zusätzlich ein Pilotträger aufgezeichnet werden, der eine Anzeige über Mono-, Stereo- oder Mehrsprachentonbetrieb beinhaltet und im Wiedergabegerät eine entsprechende Umschaltung auslöst. Der Recorder kan so ausgebildet sein, daß auf ihm vorgenommene VHS-PAL-Aufzeichnungen praktisch systemkompatibel mit VHS-PAL-Aufzeichnungen auf üblichen Geräten ohne den Teilbereich B sind. Das beruht darauf, daß bei diesen Geräten die Kopfresonanzfrequenzen zwischen 4,5 und 5 MHz liegen und Frequenzen oberhalb von 6 MHz nicht mehr registriert werden. Die Tonträger T1u und T2u werden dort nicht ausgewertet und können somit auch nicht stören.

**Patentansprüche**

1. Videorecorder, bei dem innerhalb des für die Aufzeichnung verfügbaren Frequenzbereiches ein mit dem Videosignal frequenzmodulierter Bildträger (BT), ein Farbträger (Fu) und ein mit einem Tonsignal frequenzmodulierter Tonträger (T) aufgezeichnet werden, wobei der Tonträger an einem Ende des Frequenzbereiches in einem bei der Wiedergabe vor der Demodulation des Bildträgers (BT) unterdrückten Teilbereich (B) aufgezeichnet und bei der Wiedergabe mit einem durch Vervielfachung der Zeilenfrequenz (fH) des abgetasteten Videosignals (Y) gewonnenen Mischträger rückumgesetzt wird, **dadurch gekennzeichnet,** daß der Tonträger (T1u, T2u) am oberen Ende des Frequenzbereiches des Bildträgers aufgezeichnet wird und bei der Wiedergabe der zur Umsetzung der Frequenz des Tonträgers (T1u, T2u) dienende Mischträger (M2) eine Frequenz (5,625 MHz) in der gleichen Größenordnung wie die Frequenz des aufgezeichneten Tonträgers (T1u, T2u) hat und daß der dadurch Mischung des aufgezeichneten Tonträgers (T1u, T2u) und des Mischträgers (M2) gewonnene Tonträger (T1u', T2u') in einer weiteren Mischstufe (22) durch Mischung mit einem weiteren Mischträger (M3) auf den ursprünglichen Tonträger (T1, T2) mit der Originalfrequenz (5,5 und 5,74 MHz) umgesetzt wird.

2. Recorder nach Anspruch 1, dadurch gekennzeichnet, daß der Frequenzbereich am oberen Ende durch Schaltungsmittel um den Teilbereich (B) erweitert ist.

3. Recorder nach Anspruch 2, dadurch gekennzeichnet, daß die Köpfe oder die Kopfverstärker mit einer Resonanzstelle versehen sind, die eine Resonanzanhebung der Frequenzgang-Kennlinie in dem Teilbereich (B) bewirkt.

4. Recorder nach Anspruch 1, dadurch gekennzeichnet, daß bei der Aufnahme und/oder Wiedergabe als Mischträger (M) ein zum Umsetzen der Frequenz des Farbträgers (F) dienender Mischträger ausgenutzt ist.

5. Recorder nach Anspruch 1, dadurch gekennzeichnet, daß zwei in der Frequenz gegeneinander versetzte Tonträger (T1u, T2u) für Stereo- oder Zweisprachenbetrieb aufgezeichnet werden.

6. Recorder nach Anspruch 1, dadurch gekennzeichnet, daß in dem Teilbereich (B) zusätzlich ein pilotträger zur Markierung von Mono-, Stereo- und Mehrsprachenton aufgezeichnet wird.

**Claims**

1. Video recorder, in which a picture carrier (BT) frequency-modulated with the video signal, a colour carrier (Fu) and a sound carrier (T) frequency-modulated with a sound signal are recorded within the frequency range available for recording, the sound carrier being recorded at one end of the frequency range in a partial range (B), which is suppressed on playback before demodulation of the picture carrier (BT), and being reconverted on playback using a mixing carrier obtained by multiplication of the line frequency (fH) of the sampled video signal (Y), characterized in that the sound carrier (T1u, T2u) is recorded at the upper end of the frequency range of the picture carrier and on playback the mixing carrier (M2) used to convert the frequency of the sound carrier (T1u, T2u) has a frequency (5.625 MHz) in the same order of magnitude as the frequency of the recorded sound carrier (T1u, T2u), and that the sound carrier (T1u', T2u') obtained by mixing the recorded sound carrier (T1u, T2u) and the mixing carrier (M2) is converted to the original sound carrier (T1, T2) with the original frequency (5.5 and 5.74 MHz) in a further mixing stage (22) by mixing with a further mixing carrier (M3).

2. Recorder according to claim 1, characterized in that the frequency range is extended by the partial range (B) at the upper end by circuit means.

3. Recorder according to claim 2, characterized in that the heads or the head amplifiers are provided with a point of resonance, which causes a resonance boost of the frequency-response characteristic in the partial range (B).

4. Recorder according to claim 1, characterized in that on recording and/or playback, a mixing carrier used to convert the frequency of the colour carrier (F) is utilized as a mixing carrier (M).

5. Recorder according to claim 1, characterized in that two sound carriers (T1u, T2u) offset in frequency are recorded for stereo or bilingual operation.

6. Recorder according to claim 1, characterized in that a pilot carrier is additionally recorded in the partial range (B) to mark mono, stereo and multilingual sound.

**Revendications**

1. Magnétoscope dans lequel une porteuse image ((BT) à modulation de fréquence avec le signal vidéo, une porteuse couleur (FU) et un porteur son (T) à modulation de fréquence avec un signal son sont enregistrés à l'intérieur de la gamme de fréquences disponible pour l'enregistrement, le porteur son étant enregistré à une extrémité de la gamme de fréquences dans une gamme partielle (B) supprimée lors de la reproduction avant la démodulation de la porteuse image (BT) et étant reconverti, à la reproduction, avec une porteuse de mélange obtenue par multiplication de la fréquence ligne (fH) du signal vidéo balayé (Y), **caractérisé en ce** que le porteur son (T1u, T2u) est enregistré à l'extrémité supérieure de la gamme de fréquences de la porteuse image et qu'à la reproduction la porteuse de mélange (M2) qui sert à la conversion de la fréquence du porteur son (T1u, T2u) a une fréquence (5.625 MHz) du même ordre de grandeur que la fréquence du porteur son enregistré (T1u, T2u) et que le porteur son (T1u', T2u') obtenu par mélange du porteur son enregistré (T1u, T2u) et de la porteuse de mélange (M2) est converti dans un autre étage de mélange (22) par mélange avec une autre porteuse de mélange (M3) en porteur son d'origine (T1, T2) avec la fréquence d'origine (5.5 et 5.74 MHz).

2. Magnétoscope selon la revendication 1, **caractérisé en ce** que la gamme de fréquences à l'extrémité supérieure est élargie de la gamme partielle (B) par des organes de circuit.

3. Magnétoscope selon la revendication 1, **caractérisé an ce** que les têtes ou les amplificateurs des têtes sont pourvus d'un endroit de résonance qui provoque une augmentation de résonance de la caractéristique de fréquence dans la gamme partielle (B).

4. Magnétoscope selon la revendication 1 **caractérisé en ce** qu'à l'enregistrement et/ou à la reproduction une porteuse de mélange qui sert à convertir la fréquence de la porteuse couleur (F) est utilisée comme porteuse de mélange (M).

5. Magnétoscope selon la revendication 1, **caractérisé en ce** que deux porteurs son (T1u, T2u) décalés en fréquence l'un par rapport à l'autre sont enregistrés pour le mode stéréophonique ou le mode bilingue.

6. Magnétoscope selon la revendication 1, **caractérisé en ce** qu'une porteuse de pilote est en plus enregistrée dans la gamme partielle (B) pour le repère du mode monophonique, stéréophonique et multilingue.

Fig.1

Fig.2